# EUROPEAN PATENT SPECIFICATION

(11) **EP 3 771 845 B1**
(45) Date of publication and mention of the grant of the patent: **11.09.2024**
(21) Application number: 20185905.5
(22) Date of filing: 15.07.2020
(51) Int. Cl.: F16F 9/06, F16F 9/18, F16F 9/32, F16F 9/46, F16F 9/53, F16F 9/43

(54) **MAGNETORHEOLOGICAL HYDRAULIC DAMPER WITH PASSIVE DAMPING CHAMBER**
MAGNETORHEOLOGISCHER HYDRAULIKDÄMPFER MIT PASSIVER DÄMPFUNGSKAMMER
AMORTISSEUR HYDRAULIQUE MAGNÉTORHÉOLOGIQUE DOTÉ D'UNE CHAMBRE D'AMORTISSEMENT PASSIF

(30) Priority: 02.08.2019 CN 201910710312; 02.06.2020 US 202016891038
(43) Date of publication of application: 03.02.2021
(73) Proprietor: BeijingWest Industries Co. Ltd., 102400 Beijing (CN)
(72) Inventor: KNAPCZYK, Marcin, 31-623 Kraków (PL)
(74) Representative: Lukaszyk, Szymon

(56) References cited:
- DE-B- 1 240 340
- FR-E- 92 212
- JP-A- 2008 045 581
- US-A- 5 161 653
- US-A1- 2012 186 921

## Description

### Technical field of the Invention

The present invention relates to a hydraulic damper, in particular a motor vehicle suspension damper, comprising a main tube extending along an axis and filed with working fluid, a main piston assembly disposed slidably inside the main tube, attached to a piston rod led outside the damper through a sealed piston rod guide, dividing the main tube into a rebound chamber and a compression chamber, and provided with rebound and compression valve assemblies to control the flow of working fluid passing between the rebound chamber and the compression chamber.

### Background of the Invention

Passive dampers employing working fluid featuring constant viscosity are known to provide versatile design parameters that may be used to provide any desired characteristic of the damping force, shaped not only with respect to the velocity of the piston rod, but also with respect to high frequency and/or low amplitude events. Nonetheless the damping characteristic of passive dampers integrated into a suspension system of a motor vehicle is fixed and irresponsive to particular and ever changing road conditions that can be detected by the control systems of the vehicle and thus could be appropriately handled by the suspension system of the vehicle.

To this end active dampers, such as magnetorheological (MR) dampers filled with magnetorheological fluid controlled by magnetic field are known from the state of art. They enable changing the viscosity of the damping fluid by varying the power of the electromagnet, so that the damping characteristic can be continuously controlled. Magnetorheological fluids, however, are costly and the magnetic particles suspended within the carrier fluid greatly increase the wear and tear of the mechanical valve assemblies of the damper. Furthermore, relatively complex control systems equipped with numerous sensors are required to continuously control magnetorheological dampers, while their efficiency often remains unsatisfactory.

Patent application US6360856 discloses a hydraulic damper comprising an outer tube having a first working chamber, an inner tube located inside the first working chamber and having a second working chamber. A first piston is movably inserted into the first working chamber and a second piston comprises a coil and is movably inserted into the second working chamber. The first working chamber is filled with hydraulic fluid, while the second working chamber is filled with magnetorheological fluid.

Patent application CN107956835 discloses a damper comprising a compressible hydraulic cylinder and an incompressible auxiliary cylinder. An incompressible auxiliary cylinder is divided by auxiliary piston encompassing magnetic coils and is filled with MR fluid, wherein a compressible hydraulic cylinder is divided by main piston and is filled by a molecular medium. The main piston and the auxiliary piston are mutually connected by mutual piston rod.

Similar damper construction using two different types of working fluid is also known from document US2015165860.

It has been the object of the present invention to provide a hydraulic damper with two separate working chambers filed respectively with regular working fluid and MR fluid, which would combine advantages of both technologies in order to resolve the weaknesses of the MR dampers in order to controllably shape the desired damping characteristic within a predefined control area. Yet another object of the present invention has been to provide a damper of this kind that would be cost efficient and simple in manufacture.

Document FR 92212E discloses an elastic suspension. The elastic suspension, using hydraulic or hydropneumatic jacks, either as shock absorbers or as suspension members, in particular with correction or self-correction of level, comprises the following means, used in whole or in part: a plunger rod, or a tube, capable of sliding through the piston and its rod, itself tubular, in order to provide a communication channel from the upstream chamber of the piston to the downstream chamber; this plunger rod or tube, integral with the body of the cylinder, may be made of a deformable material with an elastic seal at the height of the level desired for this piston and, at this height, or even at other heights, capable of ensuring the watertight closure of said channel of discharge, for example through suitable lips; this rod or dip tube, associated with openings at a suitable height in said communication channel can also serve as a distributor between the upstream chambers of the piston and the downstream chambers of this piston; the lower part of this rod carries windows for communication with said downstream bearing chamber, which can be closed off by a valve; and the passage control valve, in this case, carries an elastic head for closing this passage, which is able to deform or bend around its periphery, depending on the pressure of the flow, in order to reveal more or less the communication channels between these chambers.

### Summary of the Invention

The invention provides a hydraulic damper, as recited in the outset, in which said piston rod is provided with an annular chamber in which a slidable partition is disposed dividing this chamber into a magnetorheological chamber, proximal to the main piston assembly and filled with magnetorheological fluid, and a compensation chamber, distal to the main piston assembly and filed with gas, wherein said hydraulic damper further comprises a secondary piston assembly slidably disposed inside said magnetorheological chamber, attached to a secondary piston rod sealingly and slidably guided through the main piston assembly and axially fixed with respect to the main tube, dividing said magnetorheological chamber into a magnetorheological compression chamber, distal to the main piston assembly, and a magnetorheological rebound chamber, proximal to the main piston assembly, wherein said secondary piston assembly is provided with a flow channel and at least one electromagnet coil for variably generating a magnetic flux modifying shear resistance of magnetorheological fluid to control the flow of magnetorheological fluid passing through said flow channel between said magnetorheological rebound chamber and said magnetorheological compression chamber, wherein said at least one electromagnet coil is connected with a control cable passing through said secondary piston rod and led outside the damper, wherein said piston rod comprises an extender fixed to the main piston assembly, a cylindrical body fixed to said extender and defining said magnetorheological chamber and said compensation chamber, and a mounting projection fixed to said cylindrical body at its end distal to the main piston assembly.

Preferably the damper is a twin-tube damper comprising an external tube surrounding the main tube, and a base valve assembly located at the end of the compression chamber and provided with rebound and compression valve assemblies to control the flow of working fluid passing between the compression chamber and an additional compensation chamber located outside of the main tube and inside the external tube, wherein said secondary piston rod is secured to said base valve assembly and/or said external tube.

In an alternative preferred embodiment the damper is a mono-tube damper comprising a slidable partition located at the end of the compression chamber and defining a compensation chamber filed with gas at its side distal to the piston rod guide, wherein the damper is further provided with a partition fixed to the main tube in the compression chamber and said secondary piston rod is secured to said partition.

In such an embodiment said compensation chamber may be preferably connected with a reservoir external with respect to the main tube.

Preferably the magnetorheological rebound chamber has a nonzero volume in a maximal extension state of the damper.

This can be preferably achieved by a rebound stop assembly fixed on the piston rod.

Preferably said rebound valve assembly and/or said compression valve assembly of the main piston assembly provide(s) digressive characteristic of the damping force with respect to the velocity of the main piston assembly.

Preferably said piston rod is provided at its end distal to the main piston assembly with a valve for filling said compensation chamber with gas.

### Brief description of drawings

The invention shall be described and explained below in connection with the attached drawings on which:
Fig. 1 illustrates a fragment of a vehicle suspension comprising the damper according to the present invention;
Fig. 2 is a schematic cross-sectional view of an embodiment of a damper according to the present invention;
Fig. 3 is a schematic cross-sectional view of an embodiment of a secondary piston assembly shown in Fig. 2;
Fig. 4 illustrates the rebound stop assembly of the damper shown in Fig. 2;
Fig. 5 schematically illustrates a mono-tube embodiment of the damper according to the present invention; and
Fig. 6 illustrates an exemplary force to velocity characteristic of the damper according to the present invention.

### Detailed description of preferred embodiments

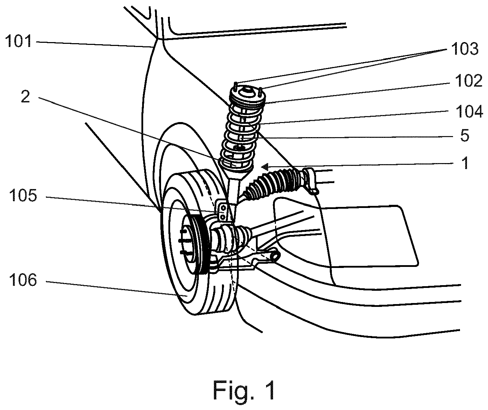

Fig. 1 schematically illustrates a fragment of an exemplary vehicle suspension comprising the damper 1 of the present invention attached to a vehicle chassis 101 by means of a top mount 102 and a number of screws 103 disposed on the periphery of the upper surface of the top mount 102. The top mount 102 is connected to a coil spring 104 and a piston rod 5 of the damper 1. An external tube 2 of the damper 1 is connected to the steering knuckle 105 supporting the vehicle wheel 106.

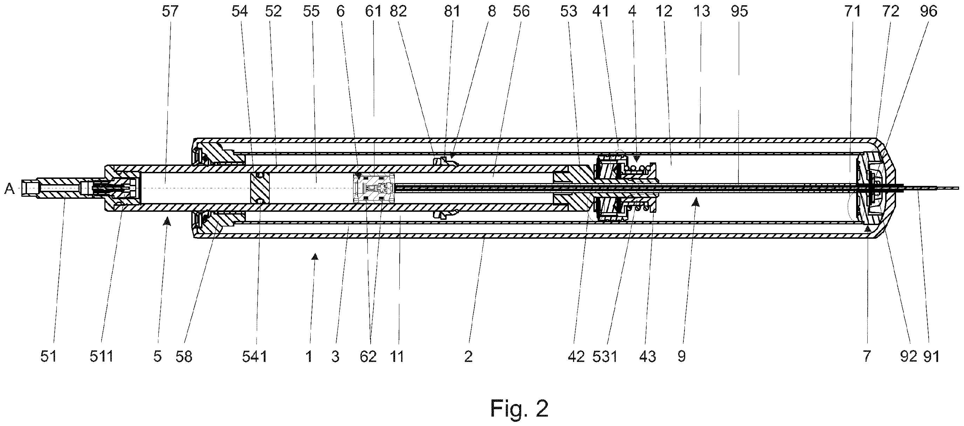

Fig. 2 presents an embodiment of a twin-tube damper 1 according to the present invention. The damper 1 comprises an external tube 2 and a main tube 3 filled with viscous working fluid inside of which a movable main piston assembly 4 connected with a piston rod 5 led outside the damper 1 through a sealed piston rod guide 58 is disposed. The damper 1 is also provided with a base valve assembly 7 fixed at the other end of the main tube 3. The main piston assembly 4 makes a sliding fit with the inner surface of the main tube 3 and divides the main tube 3 into a rebound chamber 11 (between the main piston assembly 4 and the piston rod guide 58) and a compression chamber 12 (between the main piston assembly 4 and the base valve assembly 7). An additional compensation chamber 13 is located at the other side of the base valve assembly 7 between the main tube 3 and the external tube 2.

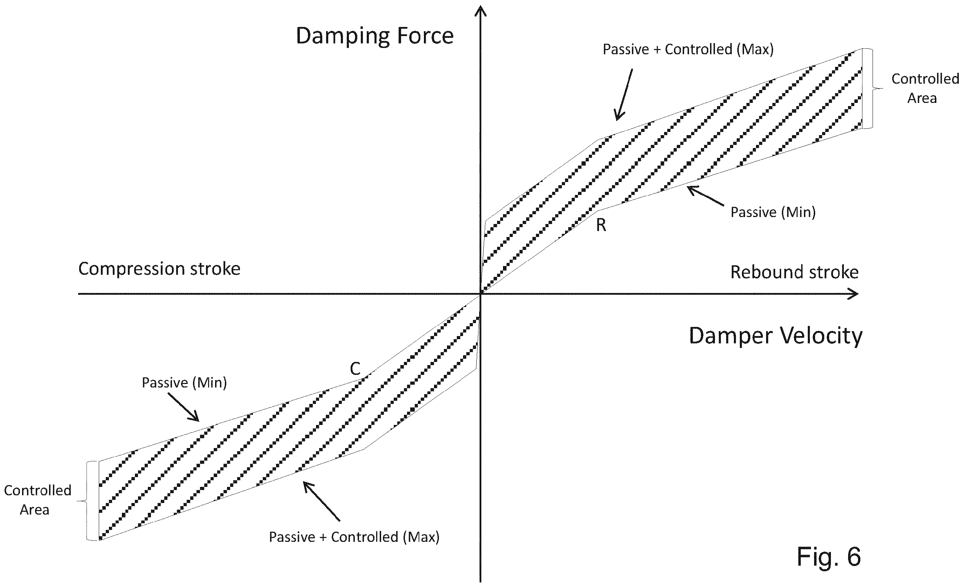

The main piston assembly 4 is provided with rebound 41 and compression 42 valve assemblies, commonly comprising stacks of deflectable or floating discs, optionally biased by springs, to control the flow of working fluid passing between the rebound chamber 11 and the compression chamber 12 while the main piston assembly 4 is in motion along an axis A. Also the base valve assembly 7 is provided with rebound 71 and compression 72 valve assemblies to control the flow of working fluid passing between the additional compensation chamber 13 and the compression chamber 12, respectively, during rebound and compression stroke of the damper 1. As it is well known to those skilled in the art, the valve assemblies 41, 42 and 71, 72 provide design parameters that may be used to shape desired passive characteristic of the damper 1. In this embodiment valve assemblies 41, 42 of the main piston assembly 4 provide digressive damping characteristic indicated in Fig. 6 as "Passive".

The piston rod 5 comprises a mounting projection 51 apt for fixing the rod 5 to the top mount 102 which is screwed into a cylindrical body 52. An extender 53 is screwed into the cylindrical body 52 at the other side thereof. The extender 53 connects the piston rod 5 with the main piston assembly 4, which is secured on a threaded projection 531 of the extender 53 by means of a nut 43. The piston rod 5, and more precisely the cylindrical body 52 of the piston rod 5 defines an internal, annular chamber 55, 56, 57 in which a slidable partition 54, provided with a sealing 541, is disposed dividing this annular chamber 55, 56, 57 into a MR chamber 55, 56, proximal to the main piston assembly 4, and a compensation chamber 57, distal to the main piston assembly 4. In another embodiment the compensation chamber 57 could be connected with a reservoir external with respect to the piston rod 5.

A secondary piston assembly 6 is slidably disposed inside the MR chamber 55, 56, dividing the MR chamber 55, 56 into a MR compression chamber 55, distal to the main piston assembly 4, and a MR rebound chamber 56, proximal to the main piston assembly 4. The secondary piston assembly 6 is attached to a secondary piston rod 9 having a cylindrical body 95 which is sealingly and slidably guided through the main piston assembly 4, and more precisely through the extender 53 of the piston rod 5 on which the main piston assembly 4 is secured. Further the secondary piston rod 9 passes through the compression chamber 12, the base valve assembly 7 and the bottom of the external tube 2. The secondary piston rod 9 is secured to the base valve assembly 7 by means of a nut 92 screwed on a threaded, narrowed end of the cylindrical body 95 and abutting a washer 96 in the compensation chamber 13. Thus the axial position of the secondary piston assembly 6 with respect to the main tube 3 is fixed.

The MR chamber 55, 56 is filled with MR fluid that may be any conventional MR fluid including particles containing magnetic material such as iron or iron alloys which are suspended in the fluid and can be magnetically activated and controlled within the fluid by controlling a magnetic field. The compensation chamber 57 is filed with gas, such as air, under pressure to compensate differences between the volumes of the MR rebound chamber 56 and the MR compression chamber 55 induced by the presence of the secondary piston rod 9 in the MR rebound chamber 56. To this end, in this embodiment, the mounting projection 51 comprises an inlet valve 511. In other embodiments of the damper, the compensation chamber 57 may be filed with gas at the assembly line and the damper ready to use may be devoid of any valve.

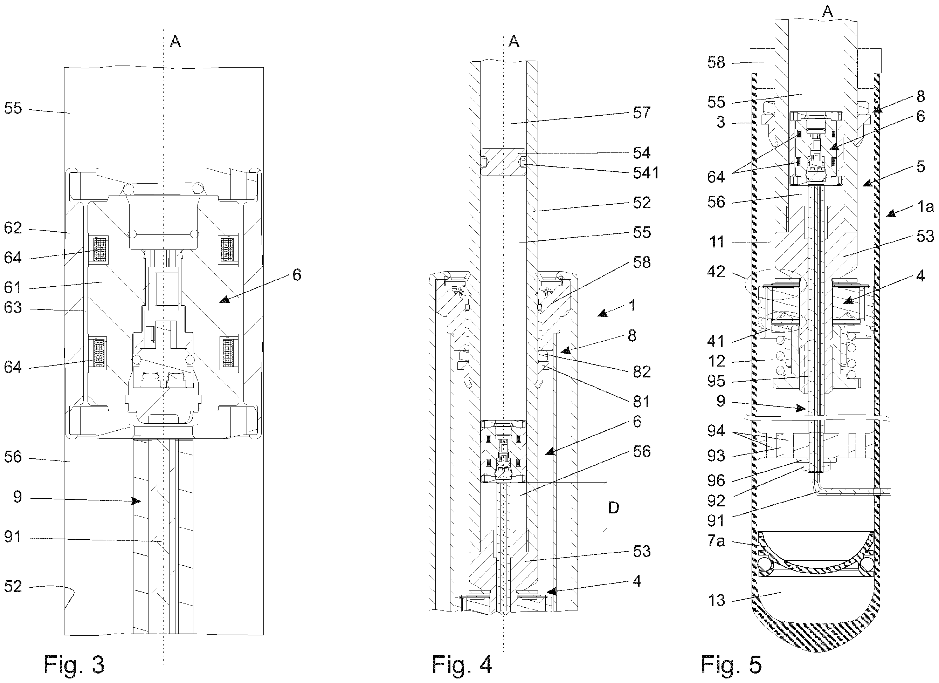

As shown in Fig. 3, in this embodiment, the secondary piston assembly 6 comprises a body 61 housing two electromagnetic coils 64 separated by an axial gap. The coils 64 are connected with an isolated control cable 91 passing through the cylindrical body 95 of the secondary piston rod 9 and led outside the damper 1 to be connected to the control systems of the vehicle. A flux cylinder 62 is disposed around the body 61 to form an annular flow channel 63 between the inner annular surface of the flux cylinder 62 and the outer annular surface of the body 61 with the coils 64. The flux cylinder 62 is secured at its axial ends to the body 61 of the secondary piston assembly 6 and forms a sliding fit with the inner surface of the cylindrical body 52 of the piston rod 5. In an inactive, de-energized mode MR fluid may flow freely through the flow channel 63 between MR chambers 55 and 56. In an energized mode the electrical current is provided to the coils 64 via the control cable 91 for variably generating a magnetic flux modifying the shear resistance of the MR fluid, and thereby controlling the flow characteristics of the MR fluid passing through the flow channel 63 allowing to achieve desired damping effect for a given application.

As shown in Fig. 4 the damper 1 further comprises a rebound stop assembly 8 which in this embodiment comprises an annular collar 81, clenched in an annular groove provided in the radially external surface of the cylindrical body 52 of the piston rod 5, and an elastomeric ring 82 adjoining the collar 81. The axial position of the rebound stop assembly 8 on the piston rod 5 is set in such a way that a point of contact of the rebound stop assembly 8 engaging surface with the engagement surface a nonzero volume of the MR rebound chamber 56 is still available. In this embodiment the engaging surface is defined by the axially external surface of the elastomeric ring 82, while the engagement surface is defined by the axially internal surface of the piston rod guide 58. Therefore, at the point of activation of the rebound stop assembly 8 a certain distance D is still present between the secondary piston assembly 6 and the extender 53 of the piston rod 5. This prevents damaging of the secondary piston assembly 6 and its possible abrupt detachment from the secondary piston rod 9.

Fig. 5 shows an embodiment of a mono-tube damper 1a according to the present invention. Reference numerals remain the same, wherein suffix (a) was added, where appropriate, to distinct elements of the same functionality but different construction. The damper 1a comprises a main tube 3 terminated with a piston rod guide 58. The main tube 3 defines an internal, annular chamber in which a partition portion 7a is disposed to be slidable, dividing this chamber into a rebound chamber 11, 12, proximal to the piston rod guide 58 and filled with viscous working fluid, and a compensation chamber 13a, distal to the piston rod guide 58. A movable main piston assembly 4 connected with a piston rod 5 led outside the damper 1 through the sealed piston rod guide 58 is slidably disposed. The main piston assembly 4 divides the main tube 3 into a rebound chamber 11 and a compression chamber 12, and is provided with rebound 41 and compression 42 valve assemblies to control the flow of working fluid passing between the rebound chamber 11 and the compression chamber 12. The compensation chamber 13a is filed with gas, such as air, under pressure to compensate differences between the volumes of the rebound chamber 11 and the compression chamber 12 induced by the presence of the piston rod 5 in the rebound chamber 11. Since the volume of the piston rod 5 is relatively large, it shall be obvious to those skilled in the art that in other embodiments of the monotube damper 1a of the present invention, the compensation chamber 13 functionality could be provided by some reservoir external to the main tube 3.

A piston rod 5, a secondary piston assembly 6 and a rebound stop assembly 8 have the same construction as in the embodiment illustrated in Figs. 2-4. The piston rod 5 comprises an extender 53 fixed to the main piston assembly 4, a cylindrical body 52 fixed to the extender 53 and defining the magnetorheological chamber 55, 56 and the compensation chamber 57, and a mounting projection (not shown) fixed to the cylindrical body 52 at the other side. The secondary piston assembly 6 is similarly attached to a secondary piston rod 9 having a cylindrical body 95 which is sealingly and slidably guided through the main piston assembly 4, and more precisely through the extender 53 of the piston rod 5 on which the main piston assembly 4 is secured.

A partition member 93 is fixed in the compression chamber 12 to the main tube 3. The partition member 93 can be for example provided with an annular groove (not shown) and the main tube 3 may be clenched from outside to the inside of this groove to fix the partition member 93 axial position. The partition member 93 is provided with a number of, preferably equiangularly spaced, axial openings 94 enabling a relatively unobstructed flow of working fluid in the chamber 12. The cylindrical body 95 of the secondary piston rod 9 is provided with a threaded, narrowed end which passes through the partition member 93 and is secured at the other side by means of a nut 92 abutting a washer 96. Thus, similarly as in the embodiment shown in fig. 1 the axial position of the secondary piston assembly 6 with respect to the main tube 3 is affixed. The coils 64 of the secondary piston assembly 6 are analogously as in the first embodiment of the damper 1 connected with an isolated control cable 91 passing through the cylindrical body 95 of the secondary piston rod 9. The control cable 91 is led outside the damper 1a thorough a sealed opening in the main tube 3 in a compression chamber 12 between the partition member 93 and the partition portion 7a.

An exemplary force to velocity characteristic of the twin-tube damper according to the present invention is illustrated in Fig. 6. As shown, the main piston assembly 4 provides digressive characteristic of the damping force in a passive, de-energised mode of the secondary piston assembly 6, with distinguishable kink points C, R resulting from blow-off features of the rebound 41 and compression 42 valve assemblies of the main piston assembly 4. In dependence on the detected road conditions, for example, and the implemented control algorithm, the coils 64 of the secondary piston assembly 6 may be energised at any time in a continuous manner, correspondingly affecting continuous change of the viscosity of the MR fluid and thus the damping generated in the flow channel 63 of the secondary piston assembly 6. Any damping force within the hatched controlled area can be achieved up to the level, where the viscosity of the damping fluid flowing through the flow channel 63 reaches its maximum.

The above embodiments of the present invention are merely exemplary. The figures are not necessarily to scale, and some features may be exaggerated or minimized. These and other factors however should not be considered as limiting, the intended scope of protection of which is indicated in appended claims.

### List of reference numerals

- 1.: damper
11. rebound chamber
12. compression chamber
13. compensation chamber
- 2.: external tube
- 3.: main tube
- 4.: main piston assembly
41. rebound valve assembly
42. compression valve assembly
43. nut
- 5.: piston rod
51. mounting projection
511. valve
52. cylindrical body
53. extender
531. threaded projection
54. slidable partition
541. sealing
55. magnetorheological compression chamber
56. magnetorheological rebound chamber
57. compensation chamber
58. piston rod guide
- 6.: secondary piston assembly
61. body
62. flux cylinder
63. annular flow channel
64. electromagnetic coil
- 7.: base valve assembly
71. rebound valve assembly
72. compression valve assembly
- 7a.: partition portion
- 8.: rebound stop assembly
81. collar
82. elastomeric ring
- 9.: secondary piston rod
91. control cable
92. nut
93. partition member
94. openings
95. cylindrical body
96. washer
- 101.: vehicle chassis
- 102.: top mount
- 103.: screw
- 104.: spring
- 105.: steering knuckle
- 106.: vehicle wheel

## Claims

1. A hydraulic damper (1, 1a), in particular a motor vehicle suspension damper, comprising a main tube (3) extending along an axis (A) and filed with working fluid, a main piston assembly (4) disposed slidably inside the main tube (3), attached to a piston rod (5) led outside the hydraulic damper (1) through a sealed piston rod guide (58), dividing the main tube (3) into a rebound chamber (11) and a compression chamber (12), and provided with rebound and compression valve assemblies (41, 42) to control the flow of working fluid passing between the rebound chamber (11) and the compression chamber (12), **characterized in that** said piston rod (5) is provided with an annular chamber (55, 56, 57) in which a slidable partition (54) is disposed dividing this chamber into a magnetorheological chamber (55, 56), proximal to the main piston assembly (4) and filled with magnetorheological fluid, and a compensation chamber (57), distal to the main piston assembly (4) and filed with gas, wherein said hydraulic damper (1, 1a) further comprises
a secondary piston assembly (6) slidably disposed inside said magnetorheological chamber (55, 56), attached to a secondary piston rod (9) sealingly and slidably guided through the main piston assembly (4) and axially fixed with respect to the main tube (3), dividing said magnetorheological chamber (55, 56) into a magnetorheological compression chamber (55), distal to the main piston assembly (4), and a magnetorheological rebound chamber (56), proximal to the main piston assembly (4),
wherein said secondary piston assembly (6) is provided with a flow channel (63) and at least one electromagnet coil (64) for variably generating a magnetic flux modifying shear resistance of magnetorheological fluid to control the flow of magnetorheological fluid passing through said flow channel (63) between said magnetorheological rebound chamber (56) and said magnetorheological compression chamber (55), wherein said at least one electromagnet coil (64) is connected with a control cable (91) passing through said secondary piston rod (9) and led outside the hydraulic damper (1), wherein
said piston rod (5) comprises an extender (53) fixed to the main piston assembly (4), a cylindrical body (52) fixed to said extender (53) and defining said magnetorheological chamber (55, 56) and said compensation chamber (57), and a mounting projection (51) fixed to said cylindrical body (52) at its end distal to the main piston assembly (4).

2. The hydraulic damper according to Claim 1, wherein the hydraulic damper (1) is a twin-tube damper comprising an external tube (2) surrounding the main tube, and a base valve assembly (7) located at the end of the compression chamber (12) and provided with rebound and compression valve assemblies (71, 72) to control the flow of working fluid passing between the compression chamber (12) and an additional compensation chamber (13) located outside of the main tube (3) and inside the external tube (2), wherein
said secondary piston rod (9) is secured to said base valve assembly (7) and/or said external tube (2).

3. The hydraulic damper according to Claim 1, wherein the hydraulic damper (1a) is a mono-tube damper comprising a partition portion (7a) which is slidable and located at the end of the compression chamber (12) and defines a compensation chamber (13) filed with gas at its side distal to the piston rod guide (58), wherein
the hydraulic damper (1a) is further provided with a partition member (93) fixed to the main tube (3) in the compression chamber (12) and said secondary piston rod (9) is secured to said partition member (93).

4. The hydraulic damper according to Claim 3, wherein said compensation chamber (13) is connected with a reservoir external with respect to the main tube (3).

5. The hydraulic damper according to any of the preceding Claims, wherein the magnetorheological rebound chamber (56) has a nonzero volume in a maximal extension state of the hydraulic damper (1, 1a).

6. The hydraulic damper according to Claim 5, wherein it is provided with a rebound stop assembly (8) fixed on the piston rod (5).

7. The hydraulic damper according to any of the preceding Claims, wherein said rebound valve assembly (41) and/or said compression valve assembly (42) of the main piston assembly (4) provide(s) digressive characteristic of the damping force with respect to the velocity of the main piston assembly (4).

8. The hydraulic damper according to any of the preceding Claims, wherein said piston rod (5) is provided at its end distal to the main piston assembly (4) with a valve (511) for filling said compensation chamber (57) with gas.

## Patentansprüche

1. Ein hydraulischer Dämpfer (1, 1a), insbesondere Aufhängungsdämpfer für Kraftfahrzeuge, mit einem Hauptrohr (3), das sich entlang einer Achse (A) erstreckt und mit Arbeitsflüssigkeit gefüllt ist, einer Hauptkolbenbaugruppe (4), die gleitend im Inneren des Hauptrohrs (3) angeordnet und an einer Kolbenstange (5) befestigt ist, die durch eine abgedichtete Kolbenstangenführung (58) aus dem hydraulischen Dämpfer (1) herausgeführt ist, wobei sie das Hauptrohr (3) in eine Ausstoßkammer (11) und eine Druckkammer (12) unterteilt und mit Ausstoß- und Druckventilbaugruppen (41, 42) versehen ist, um den Fluss der Arbeitsflüssigkeit zu steuern, das zwischen der Ausstoßkammer (11) und der Druckkammer (12) fließt, **dadurch gekennzeichnet, dass** die Kolbenstange (5) mit einer ringförmigen Kammer (55, 56, 57) versehen ist, in der eine verschiebbare Trennwand (54) angeordnet ist, die diese Kammer in eine magnetorheologische Kammer (55, 56) unterteilt, die proximal zu der Hauptkolbenbaugruppe (4) liegt und mit magnetorheologischer Flüssigkeit gefüllt ist, und eine Ausgleichskammer (57), die distal zu der Hauptkolbenbaugruppe (4) liegt und mit Gas gefüllt ist, wobei der hydraulische Dämpfer (1, 1a) ferner aus Folgendem besteht
einer Sekundärkolbenbaugruppe (6), die gleitend innerhalb der magnetorheologischen Kammer (55, 56) angeordnet ist und an einer Sekundärkolbenstange (9) befestigt ist, die abdichtend und gleitend durch die Hauptkolbenbaugruppe (4) geführt wird und axial in Bezug auf das Hauptrohr (3) fixiert ist, wobei die magnetorheologische Kammer (55, 56) in eine magnetorheologische Kompressionskammer (55), die distal zur Hauptkolbenbaugruppe (4) liegt, und eine magnetorheologische Rückprallkammer (56), die proximal zur Hauptkolbenbaugruppe (4) liegt, unterteilt wird,
wobei die Sekundärkolbenbaugruppe (6) mit einem Strömungskanal (63) und mindestens einer Elektromagnetspule (64) zur variablen Erzeugung eines magnetischen Flusses versehen ist, der den Scherwiderstand der magnetorheologischen Flüssigkeit modifiziert, um die Strömung der magnetorheologischen Flüssigkeit zu steuern, das durch den Strömungskanal (63) zwischen der magnetorheologischen Rückprallkammer (56) und der magnetorheologischen Kompressionskammer (55) fließt, wobei die mindestens eine Elektromagnetspule (64) mit einem Steuerkabel (91) verbunden ist, das durch die Sekundärkolbenstange (9) verläuft und aus dem hydraulischen Dämpfer (1) herausgeführt ist,
wobei
die Kolbenstange (5) ein an der Hauptkolbenbaugruppe (4) befestigtes Verlängerungsstück (53), einen an dem Verlängerungsstück (53) befestigten zylindrischen Körper (52), der die magnetorheologische Kammer (55, 56) und die Ausgleichskammer (57) definiert, und einen an dem zylindrischen Körper (52) an seinem von der Hauptkolbenbaugruppe (4) entfernten Ende befestigten Montagevorsprung (51) umfasst.

2. Der hydraulische Dämpfer nach Anspruch 1, wobei der hydraulische Dämpfer (1) ein Zweirohrdämpfer ist, der ein Außenrohr (2), das das Hauptrohr umgibt, und eine Bodenventilbaugruppe (7) umfasst, die sich am Ende der Druckkammer (12) befindet und mit Zug- und Druckventilbaugruppen (71, 72) versehen ist, um den Fluss der Arbeitsflüssigkeit zu steuern, die zwischen der Druckkammer (12) und einer zusätzlichen Ausgleichskammer (13) fließt, die sich außerhalb des Hauptrohrs (3) und innerhalb des Außenrohrs (2) befindet,
wobei
die Sekundärkolbenstange (9) an der Bodenventilbaugruppe (7) und/oder dem Außenrohr (2) befestigt ist.

3. Der hydraulische Dämpfer nach Anspruch 1, wobei der hydraulische Dämpfer (1a) ein Einrohrdämpfer ist, der einen Trennwandabschnitt (7a) aufweist, der verschiebbar ist und am Ende der Druckkammer (12) angeordnet ist und eine Ausgleichskammer (13) definiert, die an ihrer Seite distal zur Kolbenstangenführung (58) mit Gas gefüllt ist, wobei der hydraulische Dämpfer (1a) außerdem mit einem Trennelement (93) versehen ist, das an dem Hauptrohr (3) in der Druckkammer (12) befestigt ist, und die Sekundärkolbenstange (9) an dem Trennelement (93) befestigt ist.

4. Der hydraulische Dämpfer nach Anspruch 3, **dadurch gekennzeichnet, dass** die Ausgleichskammer (13) mit einem außerhalb des Hauptrohres (3) liegenden Vorratsbehälter verbunden ist.

5. Der hydraulische Dämpfer nach einem der vorhergehenden Ansprüche, wobei die magnetorheologische Rückprallkammer (56) in einem maximalen Ausfahrzustand des hydraulischen Dämpfers (1, 1a) ein von Null verschiedenes Volumen aufweist.

6. Der hydraulische Dämpfer nach Anspruch 5, **dadurch gekennzeichnet, dass** er mit einer an der Kolbenstange (5) befestigten Zuganschlagbaugruppe (8) versehen ist.

7. Der hydraulische Dämpfer nach einem der vorhergehenden Ansprüche, wobei die Ausstoßventilbaugruppe (41) und/oder die Druckventilbaugruppe (42) der Hauptkolbenbaugruppe (4) eine degressive Charakteristik der Dämpfungskraft in Bezug auf die Geschwindigkeit der Hauptkolbenbaugruppe (4) liefert.

8. Der hydraulische Dämpfer nach einem der vorhergehenden Ansprüche, wobei die Kolbenstange (5) an ihrem distalen Ende zur Hauptkolbenbaugruppe (4) mit einem Ventil (511) zum Füllen der Ausgleichskammer (57) mit Gas versehen ist.

## Revendications

1. Un amortisseur hydraulique (1, 1a), en particulier un amortisseur de suspension de véhicule automobile, comprenant un tube principal (3) s'étendant le long d'un axe (A) et rempli de fluide de travail, un ensemble piston principal (4) disposé de manière coulissante à l'intérieur du tube principal (3), fixé à une tige de piston (5) conduite à l'extérieur de l'amortisseur hydraulique (1) à travers un guide de tige de piston étanche (58), divisant le tube principal (3) en une chambre de détente (11) et une chambre de compression (12), et pourvu d'ensembles soupapes de détente et de compression (41, 42) pour contrôler le débit du fluide de travail passant entre la chambre de détente (11) et la chambre de compression (12), **caractérisé en ce que** ladite tige de piston (5) est pourvue d'une chambre annulaire (55, 56, 57) dans laquelle une soupape coulissante peut être insérée, dans laquelle est disposée une séparation coulissante (54) divisant cette chambre en une chambre magnétorhéologique (55, 56), proximale par rapport à l'ensemble piston principal (4) et remplie de fluide magnétorhéologique, et une chambre de compensation (57), distale par rapport à l'ensemble piston principal (4) et
remplie de gaz, dans laquelle ledit amortisseur hydraulique (1, 1a) comprend en outre un ensemble piston secondaire (6) disposé de manière coulissante à l'intérieur de ladite chambre magnétorhéologique (55, 56), fixé à une tige de piston secondaire (9) guidée de manière étanche et coulissante à travers le piston principal (4) et fixée axialement par rapport au tube principal (3), divisant ladite chambre magnétorhéologique (55, 56) en une chambre de compression magnétorhéologique (55), distale par rapport à l'ensemble piston principal (4), et une chambre de détente magnétorhéologique (56), proximale par rapport à l'ensemble piston principal (4),
dans lequel ledit ensemble piston secondaire (6) est pourvu d'un canal d'écoulement (63) et d'au moins une bobine d'électro-aimant (64) pour générer de manière variable un flux magnétique modifiant la résistance au cisaillement du fluide magnétorhéologique afin de contrôler l'écoulement du fluide magnétorhéologique passant par ledit canal d'écoulement (63) entre ladite chambre de détente magnétorhéologique (56) et ladite chambre de compression magnétorhéologique (55), dans lequel ladite au moins une bobine d'électro-aimant (64) est reliée à un câble de commande (91) passant par ladite tige de piston secondaire (9) et conduit à l'extérieur de l'amortisseur hydraulique (1), dans lequel
ladite tige de piston (5) comprend une extension (53) fixée à l'ensemble de piston principal (4), un corps cylindrique (52) fixé à ladite extension (53) et définissant ladite chambre magnétorhéologique (55, 56) et ladite chambre de compensation (57), et une saillie de montage (51) fixée audit corps cylindrique (52) à son extrémité distale par rapport à l'ensemble piston principal (4).

2. L'amortisseur hydraulique selon la revendication 1, dans lequel l'amortisseur hydraulique (1) est un amortisseur bitube comprenant un tube externe (2) entourant le tube principal, et un ensemble soupapes de base (7) situé à l'extrémité de la chambre de compression (12) et pourvu d'ensembles soupapes de détente et de compression (71, 72) pour contrôler le flux du fluide de travail passant entre la chambre de compression (12) et une chambre de compensation supplémentaire (13) située à l'extérieur du tube principal (3) et à l'intérieur du tube externe (2), dans lequel
ladite tige de piston secondaire (9) est fixée audit ensemble de soupape de base (7) et/ou audit tube externe (2).

3. L'amortisseur hydraulique selon la revendication 1, dans lequel l'amortisseur hydraulique (1a) est un amortisseur monotube comprenant une partie de partition (7a) qui est coulissante et située à l'extrémité de la chambre de compression (12) et définit une chambre de compensation (13) remplie de gaz sur son côté distal par rapport au guide de la tige de piston (58), dans lequel
l'amortisseur hydraulique (1a) est en outre pourvu d'un élément de séparation (93) fixé au tube principal (3) dans la chambre de compression (12) et ladite tige de piston secondaire (9) est fixée à cet élément de séparation (93).

4. L'amortisseur hydraulique selon la revendication 3, dans lequel ladite chambre de compensation (13) est reliée à un réservoir externe par rapport au tube principal (3).

5. L'amortisseur hydraulique selon l'une des revendications précédentes, dans lequel la chambre de détente magnétorhéologique (56) a un volume non nul dans un état d'extension maximale de l'amortisseur hydraulique (1, 1a).

6. L'amortisseur hydraulique selon la revendication 5, dans lequel il est pourvu d'un ensemble de butée de détente (8) fixé sur la tige de piston (5).

7. L'amortisseur hydraulique selon l'une quelconque des revendications précédentes, dans lequel ledit ensemble soupape de détente (41) et/ou ledit ensemble soupape de compression (42) de l'ensemble piston principal (4) fournit une caractéristique dégressive de la force d'amortissement par rapport à la vitesse de l'ensemble piston principal (4).

8. L'amortisseur hydraulique selon l'une quelconque des revendications précédentes, dans lequel ladite tige de piston (5) est pourvue, à son extrémité distale par rapport à l'ensemble piston principal (4), d'une soupape (511) permettant de remplir de gaz ladite chambre de compensation (57).
